# EUROPÄISCHE PATENTSCHRIFT

(11) **EP 3 202 609 B1**
(45) Veröffentlichungstag und Bekanntmachung des Hinweises auf die Patenterteilung: **31.03.2021**
(21) Anmeldenummer: 17152092.7
(22) Anmeldetag: 19.01.2017
(51) Int. Cl.: B60K 15/04, B65D 55/02

(54) **BEHÄLTERVERSCHLUSS MIT RATSCHENFUNKTION**
CONTAINER CLOSURE WITH RATCHET FUNCTION
FERMETURE DE RÉCIPIENT AYANT UNE FONCTION DE CLIQUET

(30) Priorität: 05.02.2016 DE 102016201799
(43) Veröffentlichungstag der Anmeldung: 09.08.2017
(73) Patentinhaber: Bayerische Motoren Werke Aktiengesellschaft, 80809 München (DE)
(72) Erfinder: Zink, Thomas, 80935 München (DE)

(56) Entgegenhaltungen:
- EP-A1- 2 492 128
- FR-A1- 2 954 428
- US-A1- 2009 223 959
- US-A1- 2013 001 229

## Beschreibung

Die Erfindung bezieht sich auf einen Behälterverschluss mit Ratschenfunktion mit einem Deckel zum Verschließen eines Einfüllstutzens eines Tanks für ein flüssiges Reduktionsmittel, zur Verwendung in einem Kraftfahrzeug in einer Vorrichtung in welcher Stickoxide, die durch die Verbrennung von Kraftstoff in einer Verbrennungskraftmaschine entstanden sind, in Gegenwart des flüssigen Reduktionsmittels zu Stickstoff und Wasser reduziert werden, nach dem Oberbegriff des ersten Anspruchs.

Aus der DE 25 54 818 A1 ist ein schraubbarer Verschlussdeckel bekannt, welcher aus einem inneren mit Gewinde versehenen Deckelteil und einem dieses übergreifende äußeren Drehkappenteil besteht, wobei zwischen beiden Teilen ein mittels Druckfeder wirkendes Kupplungsteil zur Begrenzung des Anzugsmomentes für das innere Gewindedeckelteil gegenüber dem äußeren relativ zu diesem drehbeweglich gelagerten Drehkappenteil eingelagert ist. Hierbei wird unter Verwenden eines Federsystems zwischen beiden Deckelteilen im Zusammenwirken mit dem Kupplungsteil zur Drehmomentbegrenzung erreicht, dass das innere Deckel- bzw. äußere Drehkappenteil lediglich drehbeweglich miteinander verbunden sind und gleichzeitig die axiale Spannlagerung beider Teile wie auch des Kupplungsteiles dazwischen gewährleistet ist. Neben Ausführungsformen für die Drehmomentkupplung mit vom inneren Gewindedeckelteil her in ein hohles Drehkappenteil unter Wirkung einer Druckfeder eingreifenden Nockenteilen, bei gleichseitig axialer Spannlagerung beider relativ zueinander verdrehbar gelagerten Teilen, ist auch schon bekannt, zwischen beiden Deckelteilen eine Kupplungsscheibe mittels auf ihrem Randumfang verteilt angeordneten Nocken in entsprechend liegende Aussparungen des äußeren Drehkappenteiles in Axialrichtung nach oben gerichtet eingreifen zu lassen, wobei diese Kupplungsscheibe nach unten gerichtet zwecks Spannlagerung federnd gegen den Boden des inneren Gewindedeckelteiles abgestützt ist. Beim Erreichen eines in Abhängigkeit zur jeweils verwendeten Druckfederkraft vorab bestimmbaren Anzugsmomentes des Schraubverschlussdeckels, entsteht dann ein ratschenartiges Ausklinken der Schrägflächen der Kupplungsteile mit überrasten bei weiter frei drehbar äußerem Kappenteil, so dass der Schraubverschluss niemals zu fest angezogen werden kann, aber jederzeit in umgekehrter Drehrichtung zum Öffnen wiederum leicht zu lösen ist, indem die Nockenansätze mit zur anderen Seite angeordnet senkrechten Flanken vom Boden des Gewindedeckelteiles her sofort wieder in die Kupplungsscheibe axial nach oben zu einklinken als Verbindung zum äußeren Drehkappenteil.

Verschlussdeckel, wie oben beschrieben, mit Ratschenfunktion besitzen eine Druckfeder und sind deshalb aufwändig gestaltet und beanspruchen deshalb auch viel Einbauraum.

Einen weiteren Verschlussdeckel für einen Benzintank beschreibt die US 2013/0001229 A1, mit einem inneren und äußeren Deckelteil, verbunden durch einen Ratschenmechanismus und einen Begrenzungsmechanismus. Im oberen Teil des inneren Deckelteils sind drei Adsorberkammern untergebracht, um ein Abdampfen von Kohlenwasserstoffgasen zu verhindern. Diese Adsorberkammern und der Ratschen- und Begrenzungsmechanismus beanspruchen Einbauraum in der Deckelspitze, oberhalb und außerhalb eines Tankstutzens.

Die US 2009/0223959 A1 beschreibt ebenfalls einen Flüssigkeitsbehälter-Deckel aus einem äußeren und einem inneren Teil, verbunden mittels Ratschenzähnen und Fingern zur Drehmomentbegrenzung. Die Finger sind im oberen Bereich des äußeren Teils angebracht und erheben sich somit in jedem Fall über ein Ende eines Tankstutzens hinaus, was ebenfalls Einbauraum in der Deckelspitze, oberhalb und außerhalb des Tankstutzens beansprucht.

Die EP 2 492 128 A1 sieht eine Membrane an einem Behälterverschluss vor und die den nächstliegenden Stand der Technik bildende FR 2 954 428 A1 beschreibt einen Behälterverschluss mit innerhalb des Behälterstutzens liegender Ratscheneinrichtung und mit einem Außengewinde am Deckel. Ein zugehöriger Behälterstutzen ist nicht beschrieben.

Bei Kraftfahrzeugen werden Verschlussdeckel von Behältern für eine Harnstofflösung zur Abgasbeeinflussung von Dieselmotoren meistens verkleidet hinter schwenkbaren Klappen in der Karosserieoberfläche angeordnet, auch um ein wertiges Erscheinungsbild des Kraftfahrzeugs zu erreichen. Die entsprechenden Einfüllstutzen der Behälter sind dann in der Karosserieaußenhaut festgelegt und die Öffnung der Einfüllstutzen soll sich möglichst nahe der Karosserieaußenhaut hinter der Klappe befinden.

Der Erfindung hat die Aufgabe, einen Behälterverschluss mit Ratscheneinrichtung mit einem Deckel zum Verschließen eines Einfüllstutzens eines Harnstoffbehälters für ein Kraftfahrzeug bereitzustellen, wobei der Deckel wenig Bauraum beanspruchen und preiswert herstellbar sein soll.

Die Aufgabe wird erfindungsgemäß durch die kennzeichnenden Merkmale des Anspruchs 1 gelöst. Vorteilhafte Weiterbildungen der Erfindung beschreiben die abhängigen Ansprüche.

Nach der Erfindung ist ein Behälterverschluss für einen Tank für ein flüssiges Reduktionsmittel, zur Verwendung in einem Kraftfahrzeug in einer Vorrichtung in welcher Stickoxide, die durch die Verbrennung von Kraftstoff in einer Verbrennungskraftmaschine entstanden sind, in Gegenwart des flüssigen Reduktionsmittels zu Stickstoff und Wasser reduziert werden, mit einem Behälterstutzen, der durch einen Deckel verschließbar ist, wobei der Deckel ein Handgriffteil zum Ein- und Ausschrauben in bzw. aus dem Behälterstutzen besitzt und mit einem Stutzenteil, sowie mit einer Ratscheneinrichtung versehen ist, über die Handgriffteil und Stutzenteil mittels aneinander anliegender Verzahnungen derart unter Einbeziehung wenigstens eines Federelements gekoppelt sind, dass das Handgriffteil bei Blockierung des Stutzenteils in Eindrehrichtung, nach Überwindung eines ersten Ratschenwiderstandes aufgrund der Kraft des Federelements, relativ zum Stutzenteil in Eindrehrichtung weiter drehbar ist, wobei das Federelement einstückig mit dem Handgriffteil oder dem Stutzenteil ausgebildet ist und sich das Federelement und die Ratscheneinrichtung bei eingeschraubtem Behälterverschluss vollständig innerhalb des Behälterstutzens befinden, dadurch gekennzeichnet, dass das Stutzenteil die Öffnung des Behälterstutzens umgreift und an seinem zum Behälterstutzen hin gerichteten Innenumfang ein Innengewinde besitzt, zum Aufschrauben des Deckels auf ein Außengewinde des Behälterstutzens und dass das Stutzenteil oberhalb des Innengewindes, in Richtung der Öffnung des Behälterstutzens, eine Dichtung trägt, zur Abdichtung zwischen Behälterstutzen und Deckel, zur Verhinderung eines Reduktionsmittelaustritts.

Das hat den Vorteil, dass neben einer Bauraumersparnis, auch durch entsprechende Federelemente die Lebensdauer und das Drehmoment der Ratsche spezifischer eingestellt werden kann und zusätzlich das Stutzenteil an seinem Innenumfang eine radial umlaufende Nut besitzen kann, in der das Handgriffteil mit einer an dessen Außenumfang vollständig umlaufenden oder aus Teilabschnitten bestehenden Feder, in der Art einer Nut-Federverbindung, in axialer Richtung nicht verschiebbar und in Umfangsrichtung verdrehbar geführt ist.

Vorteilhafte Ausführungen der Erfindung zeichnen sich dadurch aus, dass das Federelement als elastischer Fortsatz des Stutzenteils zum Handgriffteil hin gerichtet oder des Handgriffteils zum Stutzenteil hin gerichtet ausgebildet ist. Wenn dann der elastische Fortsatz eine Zunge oder ein Ring ist, ist die Ratscheneinrichtung besonders einfach aufgebaut und funktionssicher. Ein Einsatz von drei oder vier Zungen oder Ringen über den Umfang des Stutzenteils oder des Handgriffteils hat sich als besonders vorteilhaft erwiesen. Eine weitere sehr einfache Ausbildung ergibt sich, wenn das Handgriffteil am Stutzenteil verdrehbar festgelegt ist und zusätzlich kann ein Öffnungsrand des Behälterstutzens vom Stutzenteil oder vom Handgriffteil übergriffen werden. Dies stellt eine einfache Verbindung von Handgriffteil und Stutzenteil dar und garantiert eine zuverlässige Funktion des Deckels, der gleichzeitig vorteilhaft formschön ausgebildet werden kann.

Eine gasdurchlässige und flüssigkeitsdichte Membrane, die am Stutzenteil oder am Handgriffteil angebracht ist und den Innenraum des Behälters von der Umgebung abtrennt, stellt sicher, dass der flüssige Inhalt des Behälters nicht durch den Behälterverschluss nach außen ausfließen kann. Dabei kann sich dann die Membrane vollständig innerhalb oder wenigstens teilweise außerhalb des Behälterstutzens befinden.

Vier Ausführungsbeispiele der Erfindung sind anhand der beigefügten Zeichnung weiter beschrieben. Dabei zeigen:
- Fig. 1:: einen erfindungsgemäßen Behälterverschluss mit einem Deckel im Längsschnitt in einer ersten Ausführung mit einer Ratscheneinrichtung,
- Fig. 2:: den erfindungsgemäßen Behälterverschluss aus Figur 1 im Querschnitt A-A,
- Fig. 3:: einen erfindungsgemäßen Behälterverschluss in schematischer Darstellung mit einem Deckel im Querschnitt in einer zweiten Ausführung mit einer Ratscheneinrichtung mit Federzungen,
- Fig. 4:: einen erfindungsgemäßen Behälterverschluss in schematischer Darstellung mit einem Deckel im Querschnitt in einer dritten Ausführung mit einer Ratscheneinrichtung mit Federringen und
- Fig. 5:: einen erfindungsgemäßen Behälterverschluss in schematischer Darstellung mit einem Deckel im Querschnitt in einer vierten Ausführung mit einer Ratscheneinrichtung mit Federarmen.

Der in den Figuren dargestellte Behälterverschluss für ein Kraftfahrzeug betrifft hier beispielsweise einen nicht gezeichneten Behälter für eine auf Harnstoff basierende Flüssigkeit, die bei der Abgasnachbehandlung für Dieselmotoren zur Reduktion der Stickoxide in einem so genannten SCR-Katalysator verwendet wird. Der Markenname für diese Flüssigkeit ist AdBlue. Der Behälter besitzt einen Behälterstutzen 1 mit einem Außengewinde 11, mittels dessen dieser entweder durch einen Deckel 7 verschließbar oder mit einer nicht gezeichneten Befülleinrichtung mit AdBlue befüllbar ist.

Der Behälterstutzen 1 befindet sich bei Personenkraftwagen meist hinter einer nicht gezeichneten schwenkbaren Klappe in der Karosserieoberfläche. Der Behälterstutzen 1ist dann in der Karosserieaußenhaut festgelegt und die Öffnung des Einfüllstutzens 1 liegt möglichst nahe der schwenkbaren Klappe, durch diese verdeckt, dahinter, verschlossen mit dem Deckel 7.

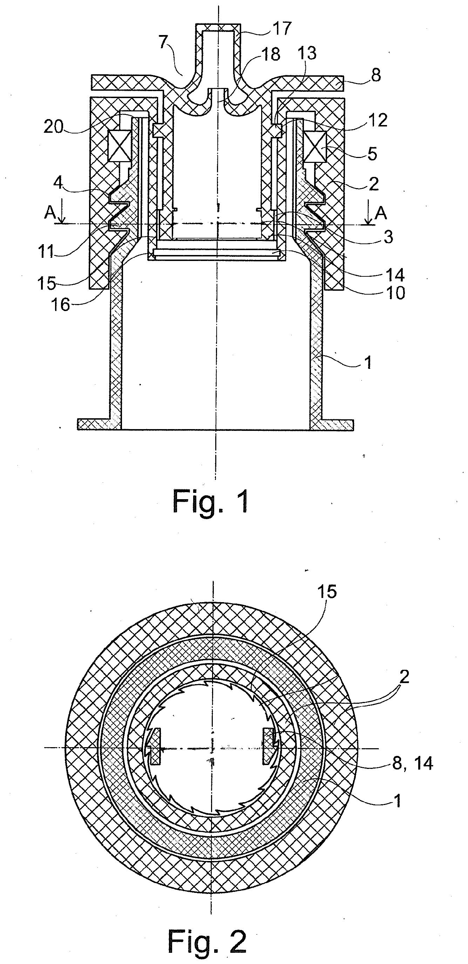

Der Deckel 7 ist mehrteilig aufgebaut und besteht in der Ausführungsform nach Figur 1 mit radial gerichteter Ratschenfunktion aus einem Handgriffteil 8 zum Ein- und Ausschrauben in bzw. aus dem Behälterstutzen 1 und einem Stutzenteil 2 für den Eingriff des Deckels 7 in den Behälterstutzen 1, sowie aus einer Ratscheneinrichtung 3, über die Handgriffteil 8 und Stutzenteil 2 mittels aneinander anliegender und ineinandergreifender Ratschenelemente derart unter Einbeziehung eines Federelements gekoppelt sind, dass das Handgriffteil 8 bei Blockierung des Stutzenteils 2 in Eindrehrichtung, nach Überwindung eines ersten Ratschenwiderstandes, aufgrund der Elastizität des Werkstoffs von Stutzenteil 2 und Handgriffteil 8, was zusammen das Federelement ausmacht, relativ zum Stutzenteil 2 in Folge unter Überwindung weiterer Ratschenwiderstände in Eindrehrichtung weiter drehbar ist.

Das Stutzenteil 2 umgreift die Öffnung des Behälterstutzens 1 und besitzt an seinem zum Behälterstutzen 1 hin gerichteten Innenumfang ein Innengewinde 4 zum Aufschrauben des Deckels 7 auf das Außengewinde 11 des Behälterstutzens 1. Oberhalb des Innengewindes 4, in Richtung der Öffnung des Behälterstutzens 1, trägt das Stutzenteil 2 eine Dichtung 5 zur Abdichtung zwischen Behälterstutzen 1 und Deckel 7, um den Austritt von AdBlue zu verhindern. Innerhalb des Behälterstutzens 1 besitzt das Stutzenteil 2 an seinem Innenumfang eine radial umlaufende Nut 12 in der das Handgriffteil 8 mit einer an dessen Außenumfang vollständig umlaufenden oder aus Teilabschnitten bestehenden Feder 13 in der Art einer Nut-Federverbindung in axialer Richtung nicht verschiebbar und in Umfangsrichtung verdrehbar geführt ist.

Noch weiter innerhalb und vollständig im Behälterstutzen 1 befindet sich die Ratscheneinrichtung 3, durch die zwei keilverzahnte, in radialer Richtung, aufgrund der Werkstoffelastizität der Werkstoffe von Handgriffteil 8 und Stutzenteil 2 elastisch verschiebliche Fortsätze 14 des Handgriffteils 8 in Richtung einer komplementären Keilverzahnung 15 am Innenumfang des Stutzenteils 2 gepresst werden. Dadurch wird ein Freilauf mit Ratschenfunktion zwischen Handgriffteil 8 und Stutzenteil 2 in Schließdrehrichtung des Deckels 7 nach dessen Aufschrauben geschaffen, während in dessen Öffnungsdrehrichtung Stutzenteil 2 und Handgriffteil 8 mittels der Keilverzahnung 15 formschlüssig ineinander greifen und sich so das Gewinde 4, 11 am Stutzenteil 2 des Deckels 7 durch Drehen dessen Handgriffsteils 8 in Öffnungsrichtung aufschraubt wodurch sich der Deckel 7 vom Behälterstutzen 1 abschrauben lässt.

Über den Deckel 7 im Behälterstutzen 1 wird der Behälter entlüftet. Dazu ist das behälterstutzeninnere Ende des Stutzenteils 2 mit einer gasdurchlässigen aber flüssigkeitsundurchlässigen Membrane 10 abgedeckt, die in eine weitere Nut 16 im Stutzenteil 2 eingelassen ist. Im Handgriffteil 8, verdeckt von einem Handgriff 17, befindet sich eine Öffnung 18 mit Entlüftungsverbindung zur Membrane 10.

Es entsteht beim Zudrehen des Deckels 7 durch die Ratscheneinrichtung 3 nach Anliegen des Stutzenteils 2 am Öffnungsrand 20 des Behälterstutzens 1 ein Geräusch aufgrund der Relativbewegung der beiden Keilprofile gegeneinander, das sich beim Weiterdrehen wiederholt und der Bedienungsperson durch den schnellen Wechsel von hohem und niedrigem Drehwiderstand auch haptisch anzeigt, dass die Endstellung beim Zuschrauben des Deckels 7 erreicht ist.

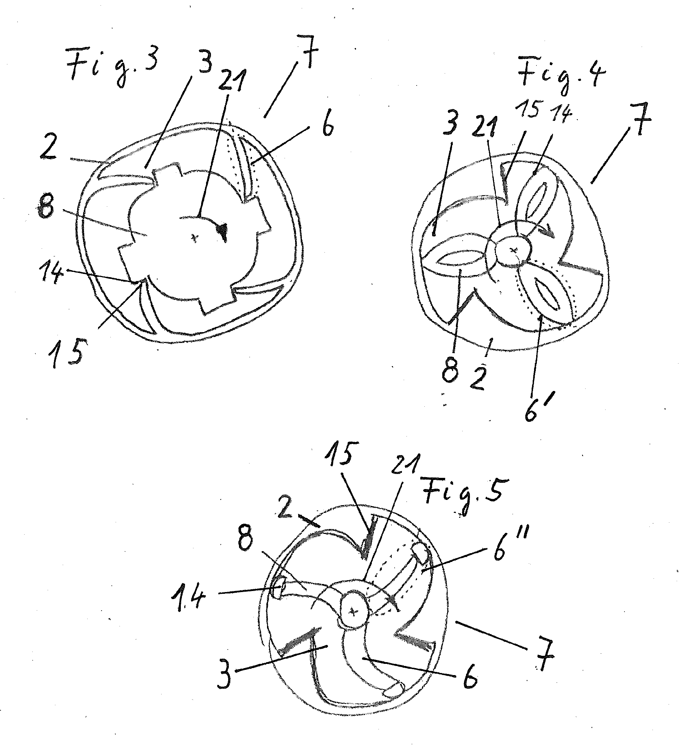

In Figur 3 ist im Querschnitt eine Ausführungsform des Deckels 7 dargestellt, bei der die Ratscheneinrichtung 3 aus Handgriffteil 8 und Stutzenteil 2, durch mit letzterem einstückig ausgebildete Zungen 6, eine gekennzeichnet durch diese umgebende Punkte, als Federelemente gebildet ist. Die Werkstoffelastizität des Werkstoffs des Stutzenteils 2 bewirkt, dass die Zungen 6 in radialer Richtung am Handgriffteil 8 anliegend, als elastisch verschiebliche Fortsätze, zusammen mit der Keilverzahnung am Außenumfang des Handgriffteils 8 die aneinander anliegenden Verzahnungen 14, 15 bilden, die so zusammenwirken, dass ein Freilauf mit Ratschenfunktion zwischen Handgriffteil 8 und Stutzenteil 2 in Schließdrehrichtung des Deckels 7 (Pfeil 21) nach dessen Aufschrauben geschaffen wird, während in dessen Öffnungsdrehrichtung Stutzenteil 2 und Handgriffteil 8, aufgrund der Stufen der Keilverzahnung und der Stellung der Zungen 6 dazu, formschlüssig ineinander greifen und sich so das Gewinde am Deckel 7 durch Drehen dessen Handgriffsteils 8 in Öffnungsrichtung aufschraubt, wodurch sich der Deckel 7 vom Behälterstutzen 1 abschrauben lässt.

In Figur 4 ist im Querschnitt eine weitere Ausführungsform des Deckels 7 dargestellt, bei der die Ratscheneinrichtung 3 aus Stutzenteil 2 und Handgriffteil 8 gebildet ist, durch mit letzterem einstückig ausgebildete elastische Ringe 6' als Federelemente, einer gekennzeichnet durch diesen umgebende Punkte. Die Werkstoffelastizität des Werkstoffs des Handgriffteils 8 bewirkt, dass die Ringe 6' in radialer Richtung am Stutzenteil 2 anliegend, als elastisch verschiebliche Fortsätze, zusammen mit der Keilverzahnung am Innenumfang des Stutzenteils 2 die aneinander anliegenden Verzahnungen 14, 15 bilden, die so zusammenwirken, dass ein Freilauf mit Ratschenfunktion zwischen Handgriffteil 8 und Stutzenteil 2 in Schließdrehrichtung des Deckels 7 (Pfeil 21) nach dessen Aufschrauben geschaffen wird, während in dessen Öffnungsdrehrichtung Stutzenteil 2 und Handgriffteil 8 aufgrund der Stufen der Keilverzahnung 15 und der Stellung der Ringe 6' dazu, formschlüssig ineinander greifen und sich so das Gewinde am Deckel 7 durch Drehen dessen Handgriffsteils 8 in Öffnungsrichtung aufschraubt, wodurch sich der Deckel 7 vom Behälterstutzen 1 abschrauben lässt.

In Figur 5 ist im Querschnitt eine zusätzliche Ausführungsform des Deckels 7 dargestellt, bei der die Ratscheneinrichtung 3 aus Stutzenteil 2 und Handgriffteil 8 gebildet ist, durch mit letzterem einstückig ausgebildete elastische Arme 6" als Federelemente, eines gekennzeichnet durch dieses umgebende Punkte. Die Werkstoffelastizität des Werkstoffs des Handgriffteils 8 bewirkt, dass die Arme 6" in radialer Richtung am Stutzenteil 2 anliegend, als elastisch verschiebliche Fortsätze zusammen mit der Keilverzahnung am Innenumfang des Stutzenteils 2 die aneinander anliegenden Verzahnungen 14, 15 bilden, die so zusammenwirken, dass ein Freilauf mit Ratschenfunktion zwischen Handgriffteil 8 und Stutzenteil 2 in Schließdrehrichtung des Deckels 7 (Pfeil 21) nach dessen Aufschrauben geschaffen wird, während in dessen Öffnungsdrehrichtung Stutzenteil 2 und Handgriffteil 8,aufgrund der Stufen der Keilverzahnung 15 und der Stellung der Arme 6" dazu, formschlüssig ineinander greifen und sich so das Gewinde am Deckel 7 durch Drehen dessen Handgriffsteils 8 in Öffnungsrichtung aufschraubt, wodurch sich der Deckel 7 vom Behälterstutzen 1 abschrauben lässt.

Allen Ausführungsformen ist gemeinsam, dass bei der Relativbewegung zwischen einem stehenden Teil und einem bewegten Teil die Ratsche zum Einsatz kommt. Dabei wird ein Außenteil zu einem Innenteil bewegt oder umgekehrt. Welches der beiden Teile bewegt und welches stehend ist spielt dabei keine Rolle. Die Bewegung wird durch eine elastische Verformung von Federelementen aus z.B. Kunststoff umgesetzt. Die Zahl und Form der Federelemente hat Einfluss auf die Langlebigkeit und das Drehmoment der Ratsche. In Figur 3 sind die Federelemente Zungen 6, die als Kunststoffstege am Außenteil ausgebildet sind. In den Figuren 4 und 5 sind die Federelemente als Ringe 6' bzw. Arme 6" am Innenteil ausgebildet.

## Patentansprüche

1. Behälterverschluss für einen Tank für ein flüssiges Reduktionsmittel, zur Verwendung in einem Kraftfahrzeug in einer Vorrichtung in welcher Stickoxide, die durch die Verbrennung von Kraftstoff in einer Verbrennungskraftmaschine entstanden sind, in Gegenwart des flüssigen Reduktionsmittels zu Stickstoff und Wasser reduziert werden, mit einem Behälterstutzen (1), der durch einen Deckel (7) verschließbar ist, wobei der Deckel (7) ein Handgriffteil (8) zum Ein- und Ausschrauben in bzw. aus dem Behälterstutzen (1) besitzt und mit einem Stutzenteil (2), sowie mit einer Ratscheneinrichtung (3) versehen ist, über die Handgriffteil (8) und Stutzenteil (2) mittels aneinander anliegender Verzahnungen (14, 15) derart unter Einbeziehung wenigstens eines Federelements gekoppelt sind, dass das Handgriffteil (8) bei Blockierung des Stutzenteils (2) in Eindrehrichtung, nach Überwindung eines ersten Ratschenwiderstandes aufgrund der Kraft des Federelements, relativ zum Stutzenteil (2) in Eindrehrichtung weiter drehbar ist, wobei das Federelement einstückig mit dem Handgriffteil (8) oder dem Stutzenteil (2) ausgebildet ist und sich das Federelement und die Ratscheneinrichtung (3) bei eingeschraubtem Behälterverschluss vollständig innerhalb des Behälterstutzens (1) befinden, **dadurch gekennzeichnet, dass** das Stutzenteil (2) die Öffnung des Behälterstutzens (1) umgreift und an seinem zum Behälterstutzen (1) hin gerichteten Innenumfang ein Innengewinde (4) besitzt, zum Aufschrauben des Deckels (7) auf ein Außengewinde (11) des Behälterstutzens (1) und dass das Stutzenteil (2) oberhalb des Innengewindes (4), in Richtung der Öffnung des Behälterstutzens (1), eine Dichtung (5) trägt, zur Abdichtung zwischen Behälterstutzen (1) und Deckel (7), zur Verhinderung eines Reduktionsmittelaustritts.

2. Behälterverschluss nach Anspruch 1, **dadurch gekennzeichnet, dass** das Federelement als elastischer Fortsatz des Stutzenteils (2) zum Handgriffteil (8) hin gerichtet oder des Handgriffteils (8) zum Stutzenteil (2) hin gerichtet ausgebildet ist.

3. Behälterverschluss nach Anspruch 2, **dadurch gekennzeichnet, dass** der elastische Fortsatz eine Zunge (6) ist.

4. Behälterverschluss nach Anspruch 2, **dadurch gekennzeichnet, dass** der elastische Fortsatz ein Ring (6') ist.

5. Behälterverschluss nach Anspruch 2, **dadurch gekennzeichnet, dass** der elastische Fortsatz ein Arm (6") ist

6. Behälterverschluss nach einem der Ansprüche 1 bis 5, **dadurch gekennzeichnet, dass** ein Öffnungsrand (20) des Behälterstutzens (1) vom Stutzenteil (2) oder vom Handgriffteil (8) übergriffen wird und dass das Handgriffteil (8) am Stutzenteil (2) verdrehbar festgelegt ist.

7. Behälterverschluss nach einem der Ansprüche 1 bis 6, **dadurch gekennzeichnet, dass** am Stutzenteil (2) oder am Handgriffteil (8) eine gasdurchlässige und flüssigkeitsdichte Membrane (10) angebracht ist, die den Innenraum des Behälters von der Umgebung abtrennt.

8. Behälterverschluss nach Anspruch 7, **dadurch gekennzeichnet, dass** sich die Membrane (10) vollständig innerhalb des Behälterstutzens (1) befindet.

## Claims

1. Vessel closure for a tank for a liquid reducing agent, for use in a motor vehicle in an apparatus in which nitrogen oxides that have formed as a result of the combustion of fuel in an internal combustion engine are reduced in the presence of the liquid reducing agent to form nitrogen and water, having a vessel neck (1) which is closable by means of a cover (7), wherein the cover (7) has a handgrip part (8) for the screwing into and unscrewing from the vessel neck (1) and is equipped with a neck part (2) and with a ratchet device (3) by means of which the handgrip part (8) and the neck part (2) are coupled by means of toothings (14, 15) which bear against one another, and in a manner incorporating at least one spring element, such that the handgrip part (8) can, in the event of blocking of the neck part (2) in a screwing-in direction, after a first ratchet resistance owing to the force of the spring element is overcome, be rotated further relative to the neck part (2) in the screwing-in direction, wherein the spring element is formed as a single piece with the handgrip part (8) or with the neck part (2), and, when the vessel closure has been screwed in, the spring element and the ratchet device (3) are situated entirely within the vessel neck (1), **characterized in that** the neck part (2) engages around the opening of the vessel neck (1) and has, at its inner circumference directed towards the vessel neck (1), an internal thread (4) for the screwing of the cover (7) onto an external thread (11) of the vessel neck (1), and **in that** the neck part (2) bears, above the internal thread (4) in the direction of the opening of the vessel neck (1), a seal (5) for sealing between the vessel neck (1) and the cover (7) for the purposes of preventing an escape of a reducing agent.

2. Vessel closure according to Claim 1, **characterized in that** the spring element is formed as an elastic projection of the neck part (2) directed toward the handgrip part (8) or of the handgrip part (8) directed toward the neck part (2).

3. Vessel closure according to Claim 2, **characterized in that** the elastic projection is a tongue (6).

4. Vessel closure according to Claim 2, **characterized in that** the elastic projection is a ring (6').

5. Vessel closure according to Claim 2, **characterized in that** the elastic projection is an arm (6'').

6. Vessel closure according to any of Claims 1 to 5, **characterized in that** an opening edge (20) of the vessel neck (1) is engaged over by the neck part (2) or by the handgrip part (8) and **in that** the handgrip part (8) is fixed rotationally conjointly to the neck part (2).

7. Vessel closure according to any of Claims 1 to 6, **characterized in that** a gas-permeable and liquid-impermeable membrane (10) is attached to the neck part (2) or to the handgrip part (8), which membrane separates the interior space of the vessel from the surroundings.

8. Vessel closure according to Claim 7, **characterized in that** the membrane (10) is situated entirely within the vessel neck (1).

## Revendications

1. Fermeture de récipient pour un réservoir d'agent réducteur fluide, prévu pour l'utilisation dans un véhicule automobile dans un dispositif dans lequel des oxydes d'azote qui se sont formés suite à la combustion de carburant dans un moteur à combustion interne sont réduits en présence de l'agent réducteur fluide pour former de l'azote et de l'eau, comprenant une tubulure de récipient (1) qui peut être fermée par un couvercle (7), le couvercle (7) présentant une partie de poignée (8) pour le vissage à, et le dévissage de, la tubulure de récipient (1) et étant pourvu d'une partie de tubulure (2) ainsi que d'un dispositif à cliquet (3) par le biais duquel la partie de poignée (8) et la partie de tubulure (2) sont accouplées au moyen de dentures (14, 15) s'appliquant l'une contre l'autre par l'action d'au moins un élément de ressort, de telle sorte que la partie de poignée (8), lors du blocage de la partie de tubulure (2) dans le sens de vissage, après avoir surmonté une première résistance du cliquet due à la force de l'élément de ressort, puisse continuer à tourner par rapport à la partie de tubulure (2) dans le sens de vissage, l'élément de ressort étant réalisé d'une seule pièce avec la partie de poignée (8) ou avec la partie de tubulure (2) et l'élément de ressort et le dispositif à cliquet (3), lorsque la fermeture de récipient est vissée, se trouvant complètement à l'intérieur de la tubulure de récipient (1), **caractérisée en ce que** la partie de tubulure (2) vient en prise autour de l'ouverture de la tubulure de récipient (1) et possède au niveau de sa périphérie intérieure orientée vers la tubulure de récipient (1), un filetage intérieur (4) pour le vissage du couvercle (7) sur un filetage extérieur (11) de la tubulure de récipient (1) et **en ce que** la partie de tubulure (2), au-dessus du filetage intérieur (4), dans la direction de l'ouverture de la tubulure de récipient (1), supporte un joint d'étanchéité (5) pour réaliser l'étanchéité entre la tubulure de récipient (1) et le couvercle (7), afin d'empêcher une fuite d'agent réducteur.

2. Fermeture de récipient selon la revendication 1, **caractérisée en ce que** l'élément de ressort est réalisé sous forme de saillie élastique de la partie de tubulure (2) orientée vers la partie de poignée (8) ou de la partie de poignée (8) orientée vers la partie de tubulure (2).

3. Fermeture de récipient selon la revendication 2, **caractérisée en ce que** la saillie élastique est une langue (6).

4. Fermeture de récipient selon la revendication 2, **caractérisée en ce que** la saillie élastique est une bague (6').

5. Fermeture de récipient selon la revendication 2, **caractérisée en ce que** la saillie élastique est un bras (6'').

6. Fermeture de récipient selon l'une quelconque des revendications 1 à 5, **caractérisée en ce qu'**un bord d'ouverture (20) de la tubulure de récipient (1) est mis en prise par le dessus par la partie de tubulure (2) ou par la partie de poignée (8) et **en ce que** la partie de poignée (8) est fixée de manière rotative à la partie de tubulure (2).

7. Fermeture de récipient selon l'une quelconque des revendications 1 à 6, **caractérisée en ce qu'**une membrane (10) perméable aux gaz et étanche aux liquides est montée sur la partie de tubulure (2) ou sur la partie de poignée (8), laquelle sépare un espace intérieur du récipient de l'environnement extérieur.

8. Fermeture de récipient selon la revendication 7, **caractérisée en ce que** la membrane (10) se trouve complètement à l'intérieur de la tubulure de récipient (1).
